## Europäisches Patentamt
**European Patent Office**

**Office européen des brevets**

(19)

(11) Publication number: **0 056 596**
**A1**

(12) # EUROPEAN PATENT APPLICATION

(21) Application number: **82100136.9**

(22) Date of filing: **11.01.82**

(51) Int. Cl.³: **C 04 B 35/56**
**B 22 F 7/06**
**//B24D3/02, C04B31/16**

(30) Priority: **21.01.81 US 226604**

(43) Date of publication of application:
**28.07.82 Bulletin 82/30**

(84) Designated Contracting States:
**AT BE CH DE FR GB IT LI NL SE**

(71) Applicant: **GENERAL ELECTRIC COMPANY**
**1 River Road**
**Schenectady New York 12305(US)**

(72) Inventor: **Ohno, John Michio**
**11650 McClumpha Road**
**Plymouth Michigan 48170(US)**

(74) Representative: **Catherine, Alain et al,**
**GETSCO 42, avenue Montaigne**
**F-75008 Paris(FR)**

(54) Improved silicon carbide composite and process for production.

(57) Sintered silicon carbide composites enveloped with diamond or cubic boron nitride (CBN) crystals are made through a process comprising:

(a) forming a first and second dispersion of uncoated diamond crystals and carbon black in paraffin;

(b) forming a mixture of carbon fiber, carbon black and filler in paraffin;

(c) compacting said dispersions and mixture together to produce an integral compact wherein said dispersions form an envelope about said mixture;

(d) subjecting said compact to a vacuum for a period of time at a temperature sufficient to vaporize essentially all of said paraffin;

(e) heating silicon to cause liquefaction, direct infiltration and diffusion into said compact in vacuum; and

(f) sintering the compact containing silicon under conditions sufficient to produce a β-silicon carbide binder uniting said composite without applying pressure.

In preferred composites, the dispersions contain different proportions of diamond or cubic boron nitride crystals. One may be utilized for a peripheral band about the mixture; the other connecting the edge as a surface layer of the composition. These composites are particularly useful as cutting material and·or wear components, where they exhibit extreme wear resistance.

./...

FIG.1

IMPROVED SILICON CARBIDE COMPOSITE AND PROCESS FOR PRODUCTION

Articles composed of materials having refractory charactéristics, hardness and resistance to erosion have myriad important uses. Representative materials are described in U.S. Patent No. 2,938,807.

Reaction sintering of $\alpha$-silicon carbide and $\beta$-silicon carbide has been known for making high temperature components. For example, $\beta$-silicon carbide is described as an excellent binder in the U.S. Patent No. 2,938,807, however, no diamond is incorporated in this silicon carbide technology.

Another useful component of these materials would be superhard crystals such as diamond or cubic boron nitride. Their superior properties of, for example, hardness have long been appreciated. A satisfactory means of incorporating superhard cyrstals into the critical area of such articles would be a significant advantage and such is an object of the process and product of the present invention.

A metal is used to bind diamond crystals in U.S. Patent No 4,063,909. Such metal may be, for example, Co, Fe, Ni, Pt, Ti, Cr, Ta and alloys containing one or more of these metals.

The above and other patents in the area of bonding diamond crystals depend on hot-press technology, as for example described in U.S. Patents No. 4,124,401, 4,167,399 and 4,173,614. Reference is also made to U.S. Patent No. 4,220,455. The latter patent discloses a process for making a homogeneous diamond composite throughout an article, wherein individual crystals are coated, and Si is infiltrated into a porous preform indirectly through a wick material. The process of manufacture of U.S. Patent No. 4,220,455 is not readily adaptable to mass production.

Many of the problems associated with the prior art have been overcome by the inventions disclosed in U.S. Patent Application Serial Nos. 167,196, filed July 9, 1980 and 167,019 filed July 9, 1980. The disclosures of these applications are incorporated herein by reference. In brief, they describe bi-layer diamond composites having a special binder of $\beta$-silicon carbide and Si. That binder forms a matrix throughout the composite so as both to hold the diamond crystals and to unite the composite layers.

The present invention employs diamond or cubic boron nitride crystals: $\alpha$-SiC, $\beta$-SiC or other filler crystals; carbon black; carbon fiber and paraffin to produce composite bodies having a cap or envelope of sintered diamond or cubic boron nitride as a thin, surface layer.

The process of the present invention is more productive than the prior art of making diamond tools or wear components in that it involves:

(1) Room temperature pressing of diamond-incorporated material to a desired shape, using high quality carbons and paraffin, without any use of other additives described in the prior art.

(2) Simple direct infiltration without use of coherent continous coating and wick material to guide infiltration. No pressure is applied, but a diffusion process is utilized in a vacuum.

(3) Shaping is greatly simplified because it is largely performed prior to in situ formation of binder by reaction between silicon and carbon.

(4) Reduction of stress between dissimilar composites by use of an intermediate dispersion and also by use of an envelope-shaped composite.

(5) Elimination of warpage by use of a set of plungers with compensation.

(6) Renforcement of cutting edge.

(7) Elimination of major grinding operation by making side relief before sintering.

The subject invention has a definite saving of time and material, such as diamond grinding wheel, to produce a final shape. A drastic cost saving is achieved by limiting the use of superabrasive crystals only in the critical area.

The composites of the present invention are prepared by the steps of:

(a) forming a first and second dispersion of diamond or cubic boron nitride crystals and carbon black in paraffin;

(b) forming a mixture of carbon fiber, carbon black and filler in paraffin;

(c) compacting said dispersions and mixture together to produce an integral compact wherein said dispersions form an envelope about said mixture;

(d) subjecting said compact to a vacuum for a period of time at a temperature sufficient to vaporize essentially all of said paraffin;

(e) heating silicon to cause liquefaction, direct infiltration and diffusion into said compact; and

(f) sintering the compact containing silicon under conditions sufficient to produce a β-silicon carbide binder uniting said composite.

As a result of this process, a highly stable bonded composite having a super wear resistance surface layer is produced. That diamond or cubic boron nitride crystal containing surface, held tightly by a strong silicon carbide bonding matrix, is particularly suitable as a tooling or cutting edge. Furthermore, a significant cost saving in machining of abrasive materials is realized due to the excellent performance in speed and wear resistance of the tooling or cutting edge of the subject invention.

The invention will now be described in connection with the drawings in which :

Fig. 1 is a schematic diagram of the process of the present invention;

Figs 2, 3, 4A, 4B, 5, 6A, 6B, 7A, and 7B are sequential, illustrative depictions of a preferred approach and specific apparatus useful in the process of the present invention;

Figs. 8A and 8B are cross-sectional views of two embodiments of a compact of the present invention;

Figs. 9A and 9B are cross-sectional views of sintered inserts respectively made from the compacts of FIGS. 8A and 8B; and

Figs. 10A, 10B and 10C sequentially illustrate a process according to an alternate embodiment fo the subject invention for making a neutral insert with side relief.

The present shaped composites may have any of the overall geometric shapes known for like tools. In use, a round insert is customarily rotated about a central axis for use in cutting, whereas a square-shaped insert is indexable four times without regrinding of the edges.

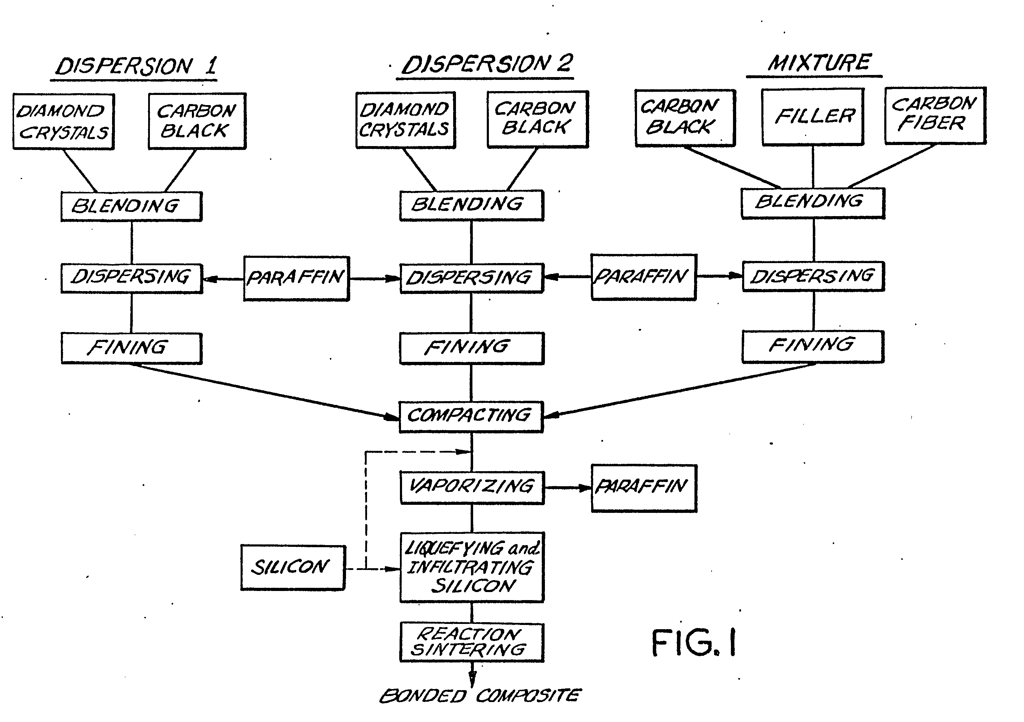

The present process for preparing silicon carbide composites is diagrammed in representative manner in FIG.1. As shown by that diagram, one of the initial steps involves the formation of two dispersions of diamond or cubic boron nitride crystals and carbon black in paraffin.

For various reasons, small and less defective crystals are preferably employed in these dispersions. In a preferred embodiment, the diamonds employed include crystals having a size less than 38 μm. Crystals of this preferred size will, when bonded with β-silicon carbide, exhibit superior resistance to chipping. In addition, they provide sharp edges having desirable relief angles for cutting inserts and other wear components.

To the superhard crystals such as diamond or cubic boron nitride crystals must be added carbon black to aid in compaction. This carbon serves subsequently by reacting to yield β-silicon carbide for the bonding matrix of the present composites. This carbon black is desirably of high purity to reduce the presence of contaminants. In particular, its sulfur content should be low to avoid possible side reactions during subsequent processing. Although varying amounts of carbon black are permissible, from 1% to 3%, most preferably about 2%, by weight of the superhard crystals has proven optimum.

The paraffin utilized in the dispersions may by any of the hydrocarbon waxes encompassed by the common meaning of this term. Again a high purity hydrocarbon should be employed to avoid possible harmful residue. For ease of admixture, a liquid paraffin is employed. This may, however, be accomplished by operating under a temperature sufficiently high to melt a paraffin which is ordinarily solid under ambient conditions. The amount of paraffin employed is a small but effective amount to aid in admixture and is removed. It generally constitutes from 3 to 6% by total weight of each dispersion.

The foregoing constituents may simply be mixed together to form each of the two dispersions. Very intimate and homogeneous dispersions are however, preferred. Consequently, a step-wise process such as that outlined in the flow diagram of FIG. 1 is desirable.

In accordance with the subject process, superhard crystals such as diamond crystals and carbon black are thoroughly blended to permit an even distribution. Only after this step is completed is the paraffin mixed into the blend. Thereafter, the dispersions are preferably subjected to a further step of fining.

The dispersions may be identical but preferably are differentiable by their respective diamond or cubic boron nitride crystal contents. One desirably comprises between 20 to 40% by total weight less diamond than the other. The higher diamond crystal content dispersion is (as described in greater detail below) ordinarily utilized to form the predominant working surface portion of an eventual composite. In preferred composites, therefore, one dispersion will contain from about 80 to 95% diamond; another, from about 40 to 80%.

By utilizing two such different dispersions for producing the present superhard envelopes of the composites, several advantages are achieved. Most particularly, many problems of cracking and warpage commonly incident to sintering of dissimilar layers may be obviated.

Returning to the process illustrated in FIG. 1, the paraffin and carbon black utilized in the mixture (or core) material for the present process may be any of those previously described. For convenience, the same ones as are ordinarily utilized in forming both the first and second dispersions are employed. Generally the mixture also contains from 3 to 6% paraffin and 2 to 4% carbon black by weight. The amount, quality and type of carbon black are again important. For example, sulfur contamination in carbon black should be avoided.

The carbon fiber employed is desirably of very small size to facilitate homogeneous admixture and, in particular, the fining operation. The sizes of fiber are preferably of from 6 to 30 µm in diameter, and from 250 to 500 µm in length.

The filler is provided to increase bulk and also to improve the compressibility of the powder mix containing fiber. It is highly desirable for a number of applications. Although such a filler may comprise any material which is stable under the conditions to which it is subjected during sintering and use, fine α- or β-silicon carbide is preferred. Ordinarily, from 40 to 75% of filler by total weight of the mixture is employed.

As is the case in production to the two dispersions, the paraffin, carbon black, carbon fiber and filler should be intimately admixed. They are also desirably screened, for example, by passage through a 0.84 mm screen, to insure fineness.

Due to the presence of paraffin, each dispersion and mixture is independently capable of being compacted (or molded) to desired shape(s). Application of pressure provides a compacted composition with sufficient "green strength" or physical stability to retain its imparted shape during subsequent operations and/or handling.

In the process of the subject invention, one or two of the two dispersions and mixture are desirably compacted to form an envelope of the composite. After the intermediate soft compact has been formed, it may be recompacted with the remaining mixture. For this step, the intermediate compact may be positioned where desired within a mold having the shape of the desired composite. The application of pressure higher than that normally employed for tungsten carbide then yields a physically stable compact.

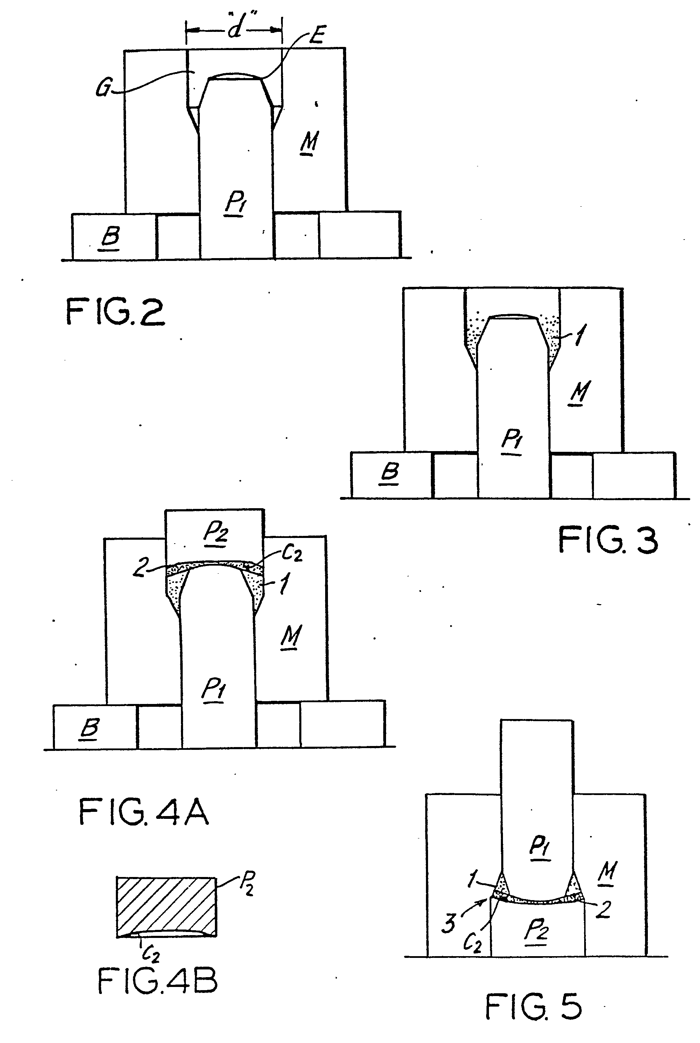

This type of sequential technique for forming the instant compacts is much preferred. FIGS. 2-7 illustrate in greater detail a preferred such sequence of steps for this operation of forming a compact from the two dispersions and mixture. This sequence corresponds to the single compacting step of FIG.1.

Referring to FIG.2, the apparatus which may be employed in the subject process includes a circular mold M which is shown in cross-section and is mounted one base ring B. Alternatively, the mold M may be of square configuration, and the various plungers would be of a corresponding square configuration. Mold M contains a tightly fitting, cylindrical plunger $P_1$ which has a symmetrical end tipe E. Due to the difference between the diameter "d" of the cylindrical bore of mold M and the diameter of the end tip E, an annular gap G is created. This gap G is filled or loaded with a dispersion 1 containing diamond crystals (see FIG. 3).

The other dispersion 2 is then loaded into the bore G on, top of dispersion 1. Plunger $P_2$ is then inserted into bore G for compacting dispersions 1 and 2, as shown in FIG. 4A. FIG. 4B illustrates in cross-section the tip portion of plunger $P_2$ which is configured to include a chamfer $c_2$ that contacts the dispersions. The chamfer tip $c_2$ of the plunger $P_2$ defines the configuration of the formed dispersions 1 and 2, and is designed to compensate for warpage in sintering to produce flat and parallel surfaces of the resulting composite, as more fully described hereinafter. If this compensation for warpage was no included in the subject process, the resulting sintered composite (which would include warpage) would require subsequent grinding utlizing a diamond grinding whell to produce flat and parallel surfaces for the composite. These extra operations are obviously time-consuming and expensive.

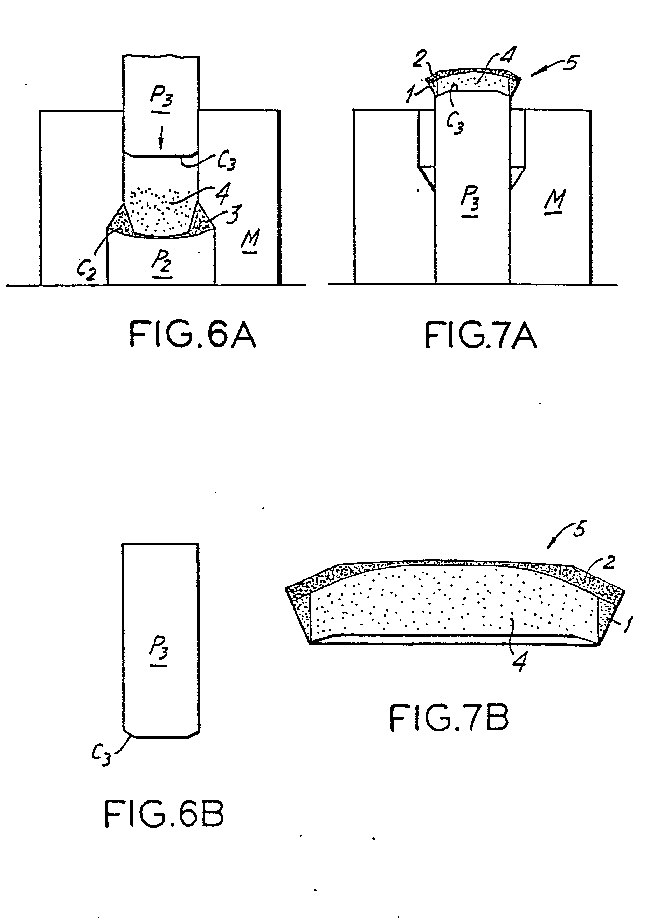

It is noted that the movement of plunger $P_2$ is without much pressure as it merely corresponds to the weight of the plunger $P_1$ when the assembly is inverted as illustrated in FIG.5. Preferably, the volume of the dispersions 1 and 2 are just enough to complete the side and top of the intermediate soft envelope of the compact. As the plunger $P_1$ is withdrawn, there remains a cap-like intermediate compact 3 composed of a bottom layer 2 and a ring-like side 1. The remaining central cavity within the cap-like compact 3 is then filled or loaded with the mixture 4, as shown in FIG. 6A. As also shown therein, a third plunger $P_3$ is then inserted into the mold M and is pressed into the dispersions and mixture at a pressure higher than that utilized for pressing tungsten carbide powder. Plunger $P_3$, similar to plunger $P_3$ includes a chamfer $c_3$, as illustrated in FIG. 6B. Chamfer $c_3$ is provided to compensate for warpage of the resulting composite due to sintering. Upon the application of high pressure by plunger $P_3$, the two dispersions 1 and 2 as well as the mixture 4 are tightly pressed to form a stable green compact, designated by the numeral 5 in FIGS. 7A and 7B. As shown, in FIG. 7A, the green compact 5 is ejected from the mold M by advancement of plunger $P_3$.

FIG. 7B illustrates the tri-layer compact 5 after ejection from the mold M. The compact 5 is composed of the compressed layers of dispersions 1 and 2, as well as mixture 4 and is in a form suitable for further processing according to the subject process, as depicted in FIG.1.

One item of great importance in these operations is the shape(s) of the mold(s). A significant advantage of the present invention lies in the fact that a shape is impressed upon a compact during molding. Thus the time consuming and difficult steps of finishing to a desired shape, common with other refractory materials, may be eliminated in accordance with the present process. The mold(s) and/or plunger(s) should therefore have the configuration(s) desired for the ultimate portion of the body to which the compact or composite corresponds.

Once molded to the desired shape, the tri-layer compact is (as may be seen in FIG.1) subjected to vacuum and temperature conditions sufficient to vaporize the paraffin from its entire volume. Generally, however, a pressure of less than 200 μm and temperature of about 500°C are utilized. Alternatively, another temperature and a correspondingly varied vacuum may be employed.

The vaporization of the paraffin is preferably conducted slowly. This avoids, for example, violent boiling and/or build-up gaseous pressure within the composite. Accordingly, conditions requiring at least 10 minutes and preferably from 10 to 15 minutes for the essentially complete removal of the paraffin are preferred.

The compacted mixture is next infiltrated with liquid silicon. There must be sufficient elemental silicon present to permit, under the conditions of sintering, infiltration of silicon to, and reaction with, substantially all of the carbon black, and carbon fiber of the compact. There may also be excess silicon. It is not detrimental if, after sintering, a small amount of free silicon remains within the resultant composite. Up to about 14%, preferably from 5 to 12%, excess silicon is even desirable to ensure substantially complete reaction in the mixture and Si diffusion into the superhard crystal layer to react with carbon black in the crystal boundary.

An optimum amount of silicon may be readily determined by experimentation prior to undertaking mass production of the subject invention whereby a smooth and clean surface may be produced without any residue on the surfaces of the compacts. This is in sharp contrast and more efficient than the indirect process of feeding silicon through wick materials according to the process described in the aforementionned U.S. Patent No. 4,220,455 to St. Pierre, et al.

The operation of bonding a compact to create a composite actually involves a series of steps, all of which may occur essentially simultaneously. These steps include melting of the silicon, infiltration of molten silicon into the compacted mixture, and reaction of diffused silicon with the carbon black, in the envelope to produce β-silicon carbide throughout the resultant composite.

To induce this last set of reactions between silicon and carbon, a minimum temperature of at least about 1450°C is required. Higher temperatures may also be utilized. A maximum of about 1490°C is, however, preferred to avoid graphitization of the diamond crystals. Normally the compact should be maintained at a temperature within this range for at least 10 minutes at 1490°C, preferably at least 30 minutes at 1450-1490°C. This ensures substantially complete reaction of available carbon black and carbon fiber with infiltrated silicon in the mixture and diffusion sintering of the envelope. Consequently the entire operation may proceed essentially simultaneously under a single set of conditions or in a sequential, step-wise progression, as desired.

The process of the present invention does not require application of pressure during silicon infiltration and diffusion. This, of course, means that there is no need for a hot press mold at this stage of the present process. Such other processes as are, for example, described in United States Letters Patent No. 4,124,401 of Lee et al, which rely upon a pressure upwards of 13.788 daN/mm$^2$ (20,000 psi) for this portion of the process.

One reaction between carbon black and carbon fiber with silicon has essentially ceased, the bonded product composite may be cooled. If, as desired, the composite was formed in the desired shape, it is ready for use. Most commonly, therefore, it will be configured as a cutting tool or other conventional article for which its properties are particularly desirable.

During sintering, the different materials of a compact undergo unequal amounts of volume change. This change is largely a function of the chemical reaction which takes place between carbon and silicon to produce β -silicon carbide in each layer. The differential between the changes of the three layers may unduly stress the compact and resultant composite. The magnitudes of these stresses have been found to be dependent upon the compositions of the materials involved, through the differences in their respective unit volume changes on sintering.

Stress, as revealed by warpage, follows certain general rules. It is oriented directionally so as to be primarily toward larger surfaces and thinner layers of superhard crystals.

Through use of an envelope according to the present invention, however, these stresses may be greatly alleviated. The dispersion having a diamond content intermediate to those of the mixture and other dispersion mitigates the stress. Consequently improved composites are obtained.

Still further improvements may be achieved in accordance with a preferred embodiment of optimizing the sub-configurations of these two dispersions within the present composites. In composites having envelopes derived from such dispersions, varying shapes and thicknesses of the individual layers of these two dispersions may be utilized to counterbalance those stresses normally encountered in sintering of a composite.

Each exterior or overall configuration of a composite leads to different stresses. For example the presence of a conventional relief angle in the composite ordinarily increases warpage. All, however, are capable of being resolved. The variables of dispersion compositions and individual layer configurations may be coordinated to harmonize the differential changes during sintering of each material present. This is possible because it has been discovered that the unit differential changes of given dispersion compositions may be offset through these variables. Consequently, incident cracking or warpage is substantially eliminated.

These bonded composites generally contain strata (or layers) which evidence their process of production. In the main, the strata are evidence by the filler of the mixture (or core material) and by the diamond or cubic boron nitride crystals of the dispersions on its surface.

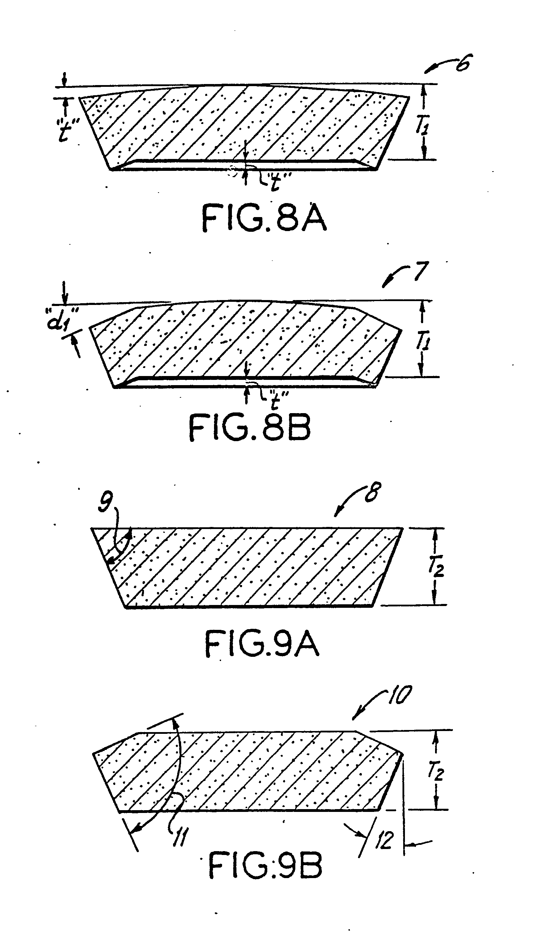

FIGS. 8A and 8B respectively illustrate cross-sectional views of two bodiments of compacts in the green state made according to the subject invention. Figure 8A illustrates an embodiment of a positive insert compact 6 in green state, whereas FIG. 8B illustrates a neutral insert compact 7 in green state. In FIGS. 8A and 8B, the designation "t" indicates an inclined or undercut portion of the respective compact which is formed during the pressing of the compact and which is provided for warpage compensation. During the sintering operation of the green compacts 6 and 7, the beveled portions or undercuts "t" disappear, and this is respectively illustrated in FIGS. 9A and 9B. The dimensional change due to sintering of the respective compacts is also exhibited by the thicknesses of the structures. For example, in FIGS. 8A and 8B, the thickness $T_1$ of the compacts is equal to 1.727 - 1.752 mm, whereas in the resulting sintered composites of FIGS. 9A and 9B, the thickness $T_2$ equals 1.778 - 1.829 mm. FIGS. 9A and 9B respectively depict cross-sectional views of a positive insert and a neutral insert with side relief, after the step of sintering the compacts of FIGS. 8A and 8B. In the positive insert 8 of FIG. 9A, the angle 9 is generally less than 90°, whereas in the neutral insert 10 of FIG. 9B, the angle 11 is equal to 90°. Numeral 12 designates a relief angle, generally in the range of 5° to 10°, in the neutral insert 10.

It is noted that in order to achieve the 90° cutting edges (or 90° circular edges) in the neutral insert 10, the angle "$d_1$" in the top surface of the compact as illustrated in FIG. 8B must be greater than the inclined portion "t" in the upper surface of the compact as illustrated in FIG. 8A. The amount and degree of inclination of the various angles of the compacts may be readily determined by experimentation such that the resulting sintered composites have the desired geometric configurations. It is noted that increasing a relief angle 9 in a positive insert 8 as shown in FIG. 9A weakens the cutting edge, whereas a 90° cutting edge in the neutral insert 10 (as illustrated in FIG. 9B) reenforces the cutting edge.

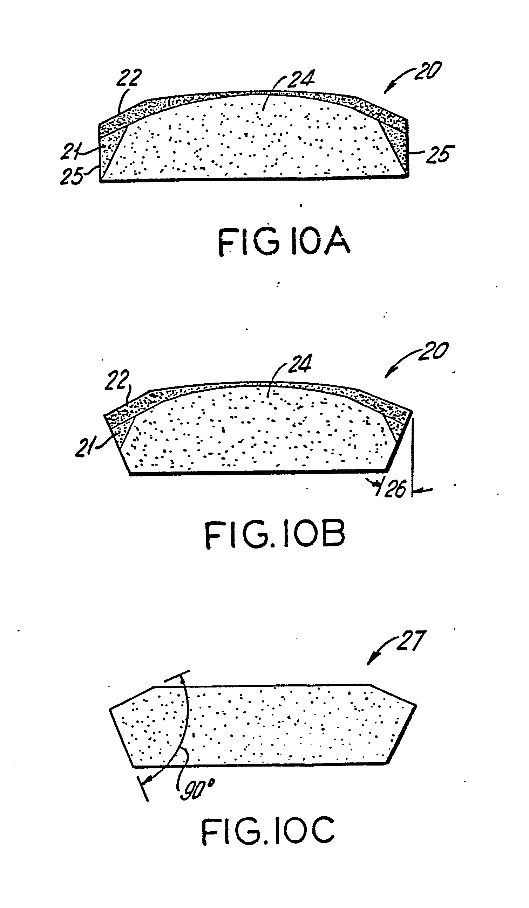

FIGS. 10A through 10C illustrate an alternate process of the subject invention for forming a neutral insert of a configuration as illustrated in FIG. 9B. In FIG. 10A, a green compact 20 is formed according to the subject process as described hereinabove, and is made of three layers including dispersions 21 and 22 and mixture 24. The mold utilized for forming the green compact 20 is configured to include straight side walls whereby the side walls 25 of the green compact 20 are generally perpendicular to the upper and lower surfaces of the compact. As illustrated in FIG. 10B, a relief angle 26 is made in the green compact 20 by machining the side wall or periphery of the green compact, after which the compact is sintered to the final configuration as illustrated in FIG. 10C. By employing the special plungers as utilized in the subject process and as depicted in FIGS. 2 through 7, flat and parallel upper and lower surfaces are produced in the resulting neutral insert 27 as shown in FIG. 10C.

The above mentioned patents and/or publications are incorporated herein by reference. Obviously, other modifications and variations of the present invention are possible, in the light of the above teachings. It is therefore, to be understood that changes may be made in the particular embodiments of the invention described which are within the full and intended scope of the invention as defined by the appended claims.

## C L A I M S

1. A process for preparing a bonded composite characterized by :

(a) forming a first and second dispersion of uncoated diamond or cubic boron nitride crystals and carbon black in paraffin;

(b) forming a mixture of carbon fiber, carbon black and filler in paraffin;

(c) compacting said dispersions and mixture together to produce an integral compact wherein said dispersions form an envelope about said mixture;

(d) subjecting said compact to a vacuum for a period of time at a temperature sufficient to vaporize essentially all of said paraffin;

(e) heating silicon to cause liquefaction, direct infiltration and diffusion into said composite in a vacuum; and

(f) sintering the compact and infiltrated silicon under conditions sufficient to produce a β-silicon carbide binder uniting said composite in the absence of applied pressure.

2. The process of Claim 1, wherein the first dispersion comprises from about 40% to 80% diamond or cubic boron nitride crystals by total weight.

3. The process of Claim 1, wherein the second dispersion comprises from about 80 to 95% diamond or cubic boron nitride crystals by total weight.

4. The process of Claim 1, wherein the side of the composite is prepared essentially from the first dispersion, while the second dispersion forms one surface of the composite.

5. The process of Claim 4, wherein the other surface and the core of the composite is prepared essentially from the mixture.

6. The process of Claim 1, wherein step (c) is performed by:

i. compacting the dispersions to produce a soft intermediate compact; and

ii. recompacting said soft intermediate compact with mixture to produce said composite.

7. The process of Claim 1, wherein the step of compacting the dispersions and mixture is performed utilizing a set of plungers of a design to compensate for warpage during sintering of the compact.

8. A bonded composite comprising at least one layer and a core united by a β-silicone carbide matrix, said layer containing diamond or cubic boron nitride crystals and forming an envelope about said core.

9. A bonded composite as in Claim 8 wherein two layers of diamond or cubic boron nitride crystals are provided.

10. A bonded composite as in Claim 8 wherein said core is formed of a mixture including carbon fiber, carbon black, and filler crystal such as SiC.

11. A bonded composite as in Claim 8 wherein said core is essentially free of diamond or cubic boron nitride crystals.

12. The composite of Claim 8, wherein the diamond or cubic boron nitride crystal-containing layer forming a surface of said composite is internally concave.

FIG.1

FIG.2

FIG. 3

FIG.4A

FIG.4B

FIG. 5

FIG.6A

FIG.7A

FIG.6B

FIG.7B

FIG.8A

FIG.8B

FIG.9A

FIG:9B

FIG I0A

FIG.I0B

FIG.I0C

## DOCUMENTS CONSIDERED TO BE RELEVANT

| Category | Citation of document with indication, where appropriate, of relevant passages | Relevant to claim |
|---|---|---|
| E | <u>EP - A1 - 0 043 541</u> (GENERAL ELECTRIC CO.)<br>* claims 1, 13; page 9, lines 20 to 30; page 10, lines 1 to 5 *<br>--- | 1,8, 10,11 |
| E | <u>EP - A1 - 0 043 542</u> (GENERAL ELECTRIC CO.)<br>* claims 1, 3, 7, 8; page 12, lines 21 to 28; page 13, lines 1 to 6 *<br>--- | 1,5,6, 8,10, 11 |
| A | <u>EP - A1 - 0 012 966</u> (GENERAL ELECTRIC CO.)<br>* claims 1, 4, 6, 7, 9; page 16, lines 22 to 36 *<br>--- | 8-11 |
| A | <u>EP - A1 - 0 010 257</u> (GENERAL ELECTRIC CO.)<br>* claims 1 to 3, 5 *<br>--- | 8 |
| A | <u>US - A - 3 925 035</u> (P.P. KEAT)<br>* abstract *<br>--- | |
| A | <u>GB - A - 2 006 732</u> (GENERAL ELECTRIC CO.)<br>--- | |
| A | <u>GB - A - 1 470 245</u> (NORTON CO.)<br>---- | |

**CLASSIFICATION OF THE APPLICATION (Int. Cl. 3)**

C 04 B 35/56
B 22 F 7/06
// B 24 D 3/02
C 04 B 31/16

**TECHNICAL FIELDS SEARCHED (Int.Cl. 3)**

B 22 F 3/00
B 22 F 7/00
B 24 D 3/00
C 01 B 31/00
C 04 B 31/00
C 04 B 35/00
C 04 B 39/00
C 04 B 41/32
C 09 K 3/14

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 16-03-1982 | STROLD |